# EUROPEAN PATENT SPECIFICATION

(11) **EP 2 972 400 B1**
(45) Date of publication and mention of the grant of the patent: **13.09.2017**
(21) Application number: 14716478.4
(22) Date of filing: 10.03.2014
(51) Int. Cl.: G01N 35/00

(54) **ANALYZER WITH MACHINE READABLE PROTOCOL PROMPTING**
ANALYSEVORRICHTUNG MIT MASCHINENLESBARER PROTOKOLLANZEIGE
ANALYSEUR AVEC ANNONCE DE PROTOCOLE LISIBLE PAR MACHINE

(30) Priority: 11.03.2013 US 201313792557
(43) Date of publication of application: 20.01.2016
(73) Proprietor: Promega Corporation, Madison, WI 53711-5399 (US)
(72) Inventor: BJERKE, Michael, Oregon, WI 53575 (US); FRANZ, Jeffrey, Madison, WI 53711-5399 (US); KARLEN, Herly, Madison, WI 53711-5399 (US); IVANOV, Ivan, Madison, WI 53711-5399 (US); LINTON, Sam, Sunnyvale, CA 94086 (US)
(74) Representative: Potter Clarkson LLP
(86) International application number: PCT/US2014/022577
(87) International publication number: WO 2014/164489

(56) References cited:
- EP-A1- 2 341 351
- WO-A1-01/68259
- US-A1- 2007 243 626
- US-A1- 2008 010 520
- US-A1- 2009 058 617
- US-A1- 2009 088 336
- US-A1- 2010 001 854
- US-A1- 2011 071 039

## Description

### BACKGROUND

The present invention relates to systems and methods for performing biological assays.

More specifically, this application relates to automated analyzers and assay protocols for use with reagents.

Biological assays using reagents and automated analyzers can involve several process steps for the user. Some assays, as well as the downstream data analysis that is performed after data acquisition, are more complex than others. Existing detection instrumentation uses complex software with a wide variety of variables and settings for the user to set prior to data acquisition. Furthermore, after data acquisition the user must analyze the data using conventional data analysis tools on their own. Currently, users must collect the raw data and plot the data themselves, which is sometimes done incorrectly or inefficiently. Previous systems collect data used to generate a standard curve and then store that data for use with future or subsequent experimental sample analysis. They also use a single data analysis method that is pre-defined prior to measuring experimental samples. Therefore, standards and experimental samples are analyzed in separate assays, in different operator runs, even on different days.

Software used to operate instrumentation is often complex, providing users with a multitude of variables that must be selected. These other instruments stop short of providing users an analysis of the data, and instead force users to perform these calculations themselves. While many users are comfortable doing these calculations in Microsoft® Excel® and other analysis software programs, it adds additional process steps, time, and sources of error for the user before knowing if the experiment was successful or unsuccessful.

Furthermore, the existing inventions describe analyses with less complex methods and which generally use a single type of analysis (e.g. a dose response curve). This analysis, limited for the user, is intended for a single process or assay type. Moreover, existing systems are specific to a single assay process using stored calibration data.
US 2011/0071039 discloses a flexible diagnostic workstation comprises is equipped to read label information on well strips of loaded well plates and on loaded reagent kit holders, automatically perform the pre-analytical steps of an immuno-assay which consists of a sequence of operations in accordance with scheduled test requirements for each microwell, read the results according to either a standard singleplex ELISA or multiplex test format as indicated by the well strip label, and report the results.
US 2008/0010520 discloses a biological sample processing apparatus having a central processing unit, a display in communication with the central processing unit and a selector for selecting a personality type of the apparatus, the selector being in communication with the central processing apparatus. The selection of a personality type prompts the central processing unit to cause the display to show a list of preprogrammed protocols for biological sample processing that correspond to the selected personality type.
US 2009/0088336 discloses devices and systems, for use at the point of care, directed toward automatic detection of analytes in a bodily fluid.
EP 2341351 discloses a test piece reading device and the test piece used therein. The test piece reading device comprises a housing, a monitor, a delivering device, an optical reader, a reaction signal reader and a control module. The test piece comprises at least one optically readable pattern which comprises identification information of the test piece.
US 2009/0058617 discloses a method for setting up a system of a reagent chip analyzer. The method is adapted to modify parameters and testing conditions according to data of an authorization tag, so as to improve the adaptability range of the reagent chip analyzer for reagent chips of multiple specifications.
US 2010/0001854 discloses an analyzer including: an information storage medium that is attached to a reagent vessel and is capable of communicating with an external device through radio waves of a predetermined frequency; a writing unit that writes history information that is generated as a reagent in the reagent vessel is used into the information storage medium; a reading unit that reads the history information from the information storage medium that is attached to the reagent vessel containing the reagent to be used; and a determining unit that determines whether a proper analysis is performable using the reagent in the reagent vessel, to which the information storage medium is attached, based on the history information read by the reading unit.

### SUMMARY

In some embodiments, the invention provides an analysis system according to claim 1. In some examples there may be provided an analysis system utilizing a reagent for performing a biological assay on a sample. The reagent is associated with a machine-readable label. A scanner reads the machine-readable label and generates a scanner signal in response to reading the machine-readable label. A controller receives the scanner signal and selects a corresponding protocol from a plurality of protocols in response to at least the scanner signal. A memory stores the plurality of protocols for the automation of one or more assays performed on one or more samples. A detector generates a detector signal in response to the assay performed on the one or more samples. The detector signal is received by the controller and processed into a data set. A user input module facilitates user selection of assay protocol parameters. The user input module is in communication with the controller. A data processing module is in communication with the controller. The data processing module receives the data set and processes the data set according to the protocol.

In other embodiments, the invention provides a method of performing a biological assay on a sample according to claim 10. In some examples there may be provided an analysis system including a detector, a scanner, a memory module, and a data processor is provided, along with a reagent including a machine-readable label. The machine readable label is scanned with the scanner and generates a scanner signal in response to reading the machine-readable label. A plurality of protocols for biological assays associated with the reagents is provided on the memory module. A protocol from the plurality of protocols is automatically selected in response to the scanner signal, where the protocol requires the reagent. A characteristic of the sample is detected with the detector. The detector generates a detector signal. A data set is collected from the detector signal. The data set is processed according to the protocol with the data processor.

Other aspects of the disclosure will become apparent by consideration of the detailed description and accompanying drawings.

### BRIEF DESCRIPTION OF THE DRAWINGS

FIG. 1 is a block diagram of an analysis system.
FIG. 2 is a perspective view of a luminometer.
FIG. 3 illustrates an example of a reagent kit box with a machine-readable label.
FIG. 4 is a flow chart, illustrating a process of automatically selecting a protocol, collecting data, and analyzing the data.
FIG. 5 is a screen depiction of a setting window of a user input display of the analysis system.
FIG. 6 is a screen depiction of the user input display, listing assay choices.
FIG. 7 is a screen depiction of the user input display, listing assay data analysis tools.
FIG. 8 is a screen depiction of the user input display, listing cell health assay data analysis tools.
FIG. 9 is a screen depiction of the user input display, listing instructions for generating an ATP to ADP conversion curve based on the data generated from the kinase assay system.
FIG. 10 is example plate layout for ATP to ADP conversion assay in a 96-well plate format.
FIG. 11 is a screen example of processed data from the analyzer system for ATP to ADP conversion assay.
FIG. 12 is a screen example of exemplary ATP to ADP conversion curve results.
FIG. 13 is a screen depiction of the user input display, listing inputs needed to generate a kinase enzyme titration curve.
FIG. 14 is an example plate layout for kinase enzyme titration in a 384-well plate format.
FIG. 15 is a screen example of processed data generated from the analysis system for a kinase enzyme titration curve.
FIG. 16 is a screen depiction of the user input display, listing inputs needed to generate kinase inhibitor IC₅₀ analysis.
FIG. 17 is an example plate layout for kinase inhibitor IC₅₀ analysis in a 384-well plate format.
FIG. 18 is a screen depiction of the user input display, listing inputs needed to generate kinase profile analysis.
FIG. 19 is a screen depiction of the user input display, listing inputs necessary for cell titration analysis.
FIG. 20 is a screen depiction of the user input display, listing inputs needed to generate dose response analysis.
FIG. 21 is a screen depiction of the user input display, illustrating the selection of a kinase assay system protocol.
FIG. 22 is a screen depiction of the user input display, illustrating the selection of a user defined protocol.
FIG. 23 is a screen depiction of the user input display, illustrating the selection of a luminescence test protocol.
FIG. 24 is a screen depiction of the user input display, illustrating optional manual user selection of protocol parameters.
FIG. 25 is a screen depiction of processed data generated from the analyzer system for generating kinase inhibitor IC₅₀ analysis.
FIG. 26 is a screen example of processed data generated from the analyzer system for kinase profile analysis.
FIG. 27 is a screen depiction of a plot generated from data derived from the analyzer system for cell titration analysis.
FIG. 28 is a screen depiction of a plot from the analyzer system for a dose response.
FIG. 29 is a screen depiction of the user input display displaying a list of automatically selectable protocols.
FIG. 30 is a screen depiction of the user input display of FIG. 29 after scanning the label of a luminescence function test kit.
FIG. 31 is a screen depiction of the user input display of FIG. 30 after completion of the automatically selected assay.

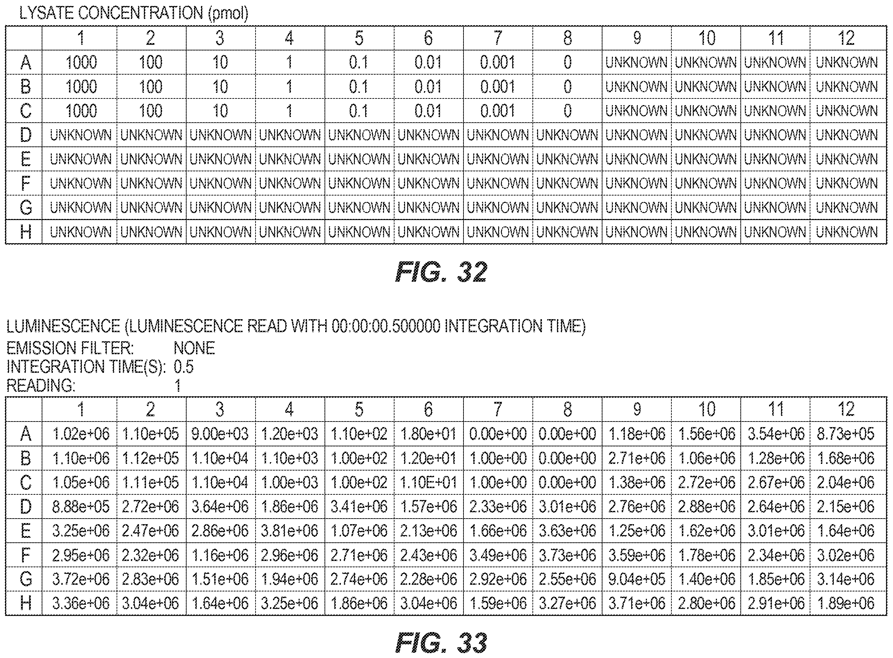

FIG. 32 is a screen depiction of a table of lysate concentration values from data derived from the analyzer.
FIG. 33 is a screen depiction of a table of luminescence values from data derived from the analyzer.

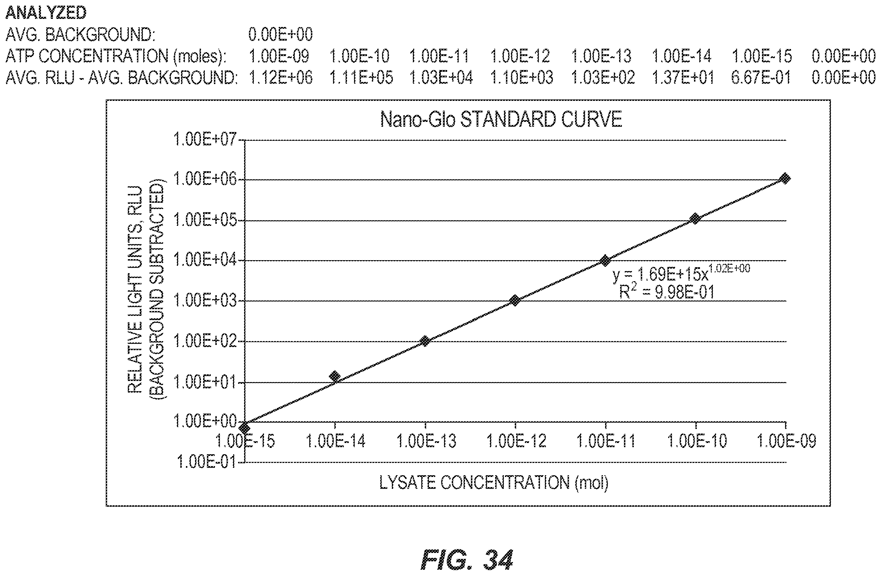

FIG. 34 is a screen depiction of a standard curve from data derived from the analyzer.

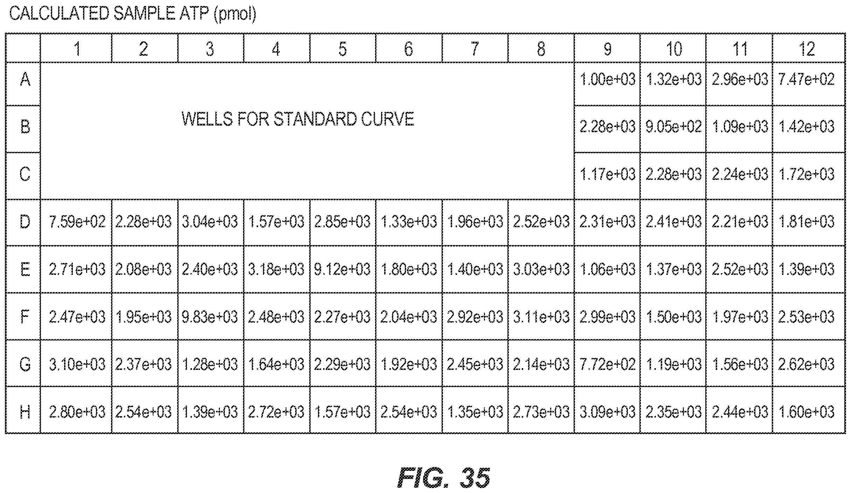

FIG. 35 is a screen depiction of a table of calculated ATP quantities from data derived from the analyzer.

### DETAILED DESCRIPTION

Before any embodiments of the invention are explained in detail, it is to be understood that the invention is not limited in its application to the details of constriction and the arrangement of components set forth in the following description or illustrated in the following drawings. The invention is capable of other embodiments and of being practiced or of being carried out in various ways.

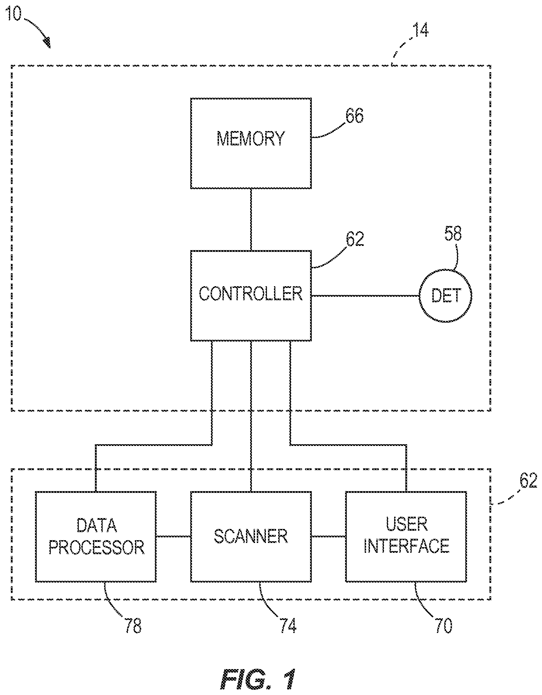

Referring to FIG. 1, an analysis system 10 includes an analyzer, such as a luminometer 14. In other embodiments, the analyzer could also be a fluorometer, thermocycler,, spectrometers, purification systems, or a multi-mode device (i.e., one that can measure luminescence, fluorescence, absorbance, and/or other characteristics) such as GloMax® Discover. The invention also has applications in biological sample processing, including purification and separation of biological constituents, such as with a Promega® Maxwell® device.

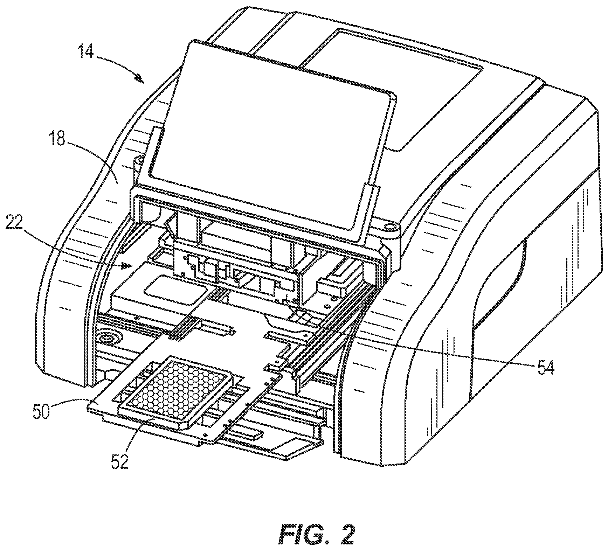

The luminometer 14 is an easy-to-use, highly sensitive microplate luminometer with a broad dynamic range. The luminometer 14 may be used to perform a wide range of luminescent assays, including, for example, bioluminescent reporter, cell-based, and biochemical assays. Referring to FIG. 2, the luminometer 14 includes a housing 18 surrounding an interior cavity 22. A sample tray 50 is configured to receive, for example, a microliter plate 52 such as a 96-well plate, a 384-well plate, or other suitable plates. In some embodiments, the wells of the microtiter plate 52 may be pre-filled with a reagent by a user. In other embodiments, reagent bottles are in fluid communication with the luminometer 14 (or other instrument type) such that a reagent may be distributed by the luminometer to the plate in the performance of an assay.

An optical head 54 (FIG. 2) includes a detector 58 (FIG. 1), such as a luminescence detector. The luminescence detector 58 reads both glow- and flash-luminescent reactions in the wells of the 96-well plates. The luminescence detector detects a luminescence characteristic of a sample and generates a detector signal. The detector 58 may also measure absorbance, fluorescence, chemi-luminescence, electro-luminescence, UV-visible light or other sample characteristics.

Referring to FIG. 1, the detector signal is received by a controller 62 that is in communication with the detector 58. The controller 62 may be, for example, a microprocessor controller. The controller 62 is in communication with a memory module 66.

A plurality of assay protocols are stored within the memory module 66, e.g. as firmware. The protocols include the sequence and timing required for the automation of one or more assays. The controller controls operation of the injector syringes and other mechanical aspects of the luminometer according to the assay protocols. The protocols also provide instructions for the collection, formatting and processing of the detector signals into a raw data set. The protocols also provide instructions for the final formatting, analysis, and plotting of the raw data.

The controller 62 is in communication with a user interface 70, a scanner 74, and a data processor 78. The user interface 70, scanner 74, and data processor 78 may be stand-alone components in some embodiments of the invention. In other embodiments, they may be components of portable electronic device 82, such as a laptop computer, tablet computer (e.g., an IPAD), or a smart phone. Communication between the controller 62 and the interface module 70, the scanner module 74, and the data processing module 78 may be by wire or wireless communication. Wireless communication may be over a wireless local area network (e.g. a WIFI network), or a telecommunications network. Alternatively, the portable electronic device 82 or individual user 70, scanner 74 and data processor 78 may be wired to the controller 62 via an ETHERNET hub. In still other embodiments, the user interface 70, scanner 74, and data processor 78 may be integrated into the luminometer 14, such that the analyzer system 10 is a single unitary device.

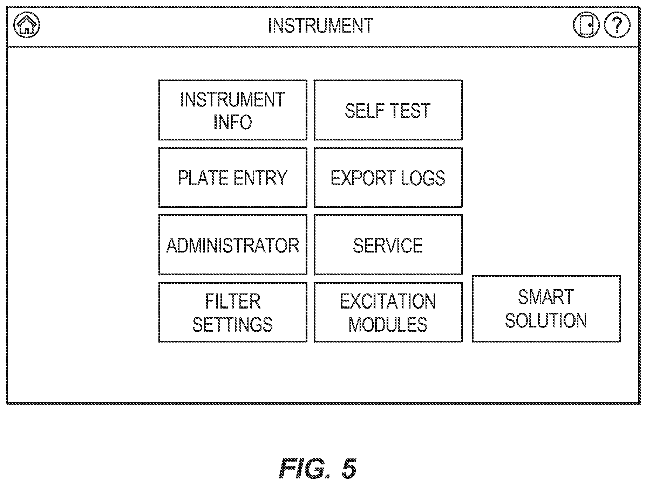

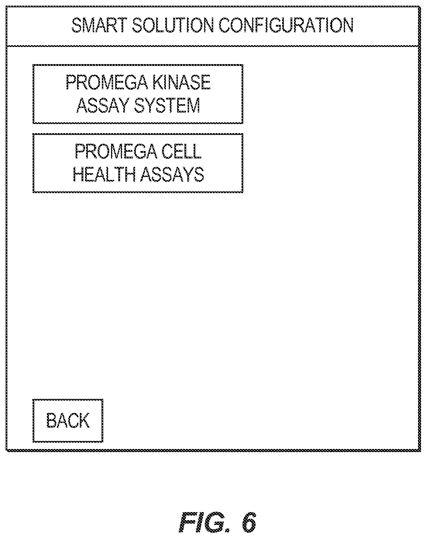

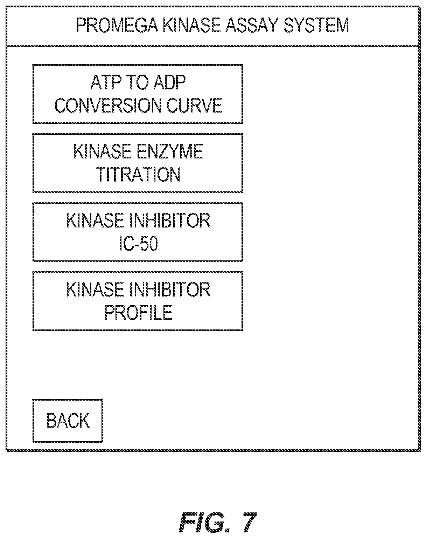

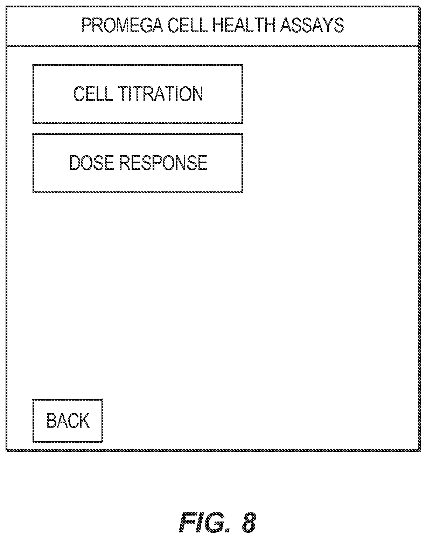

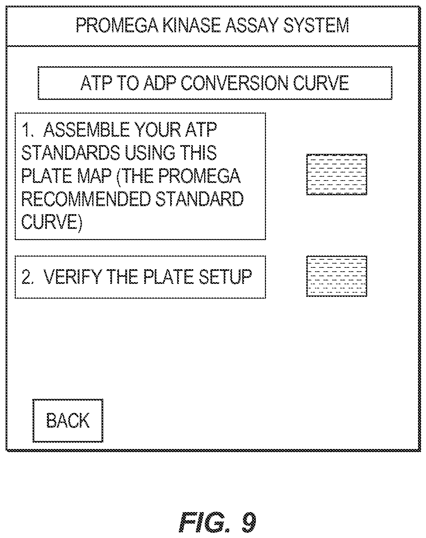

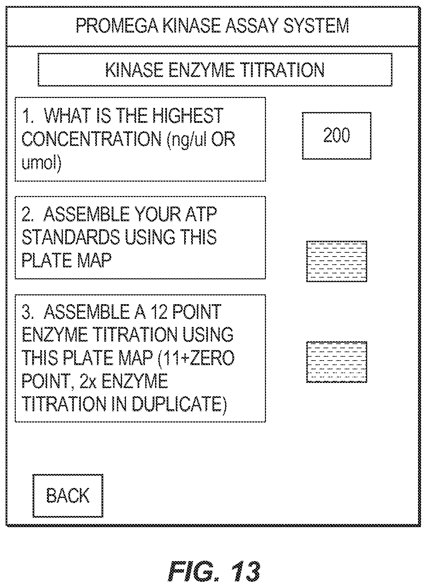

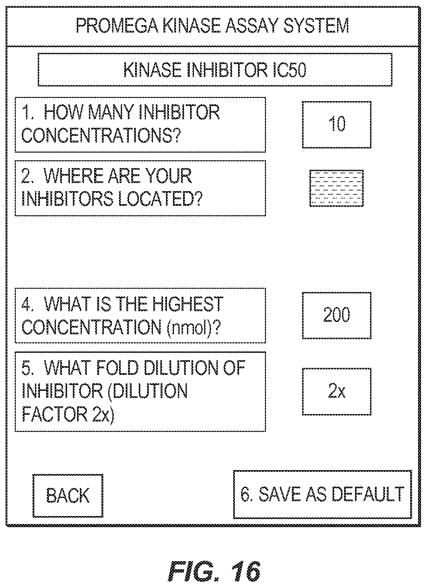

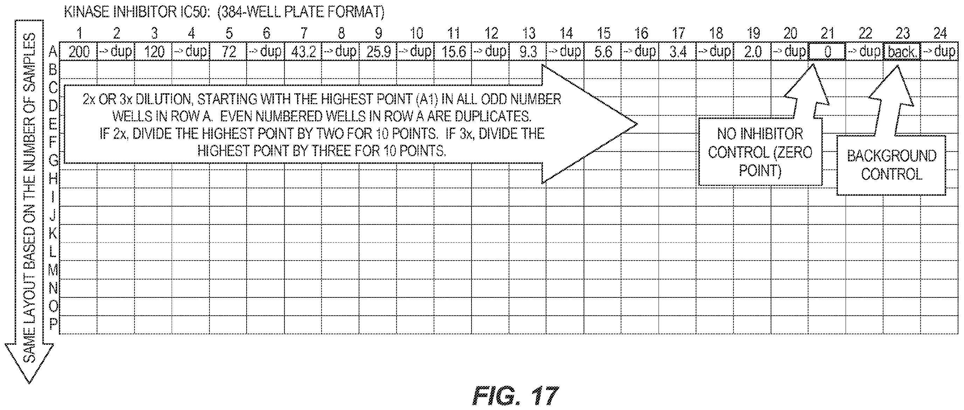

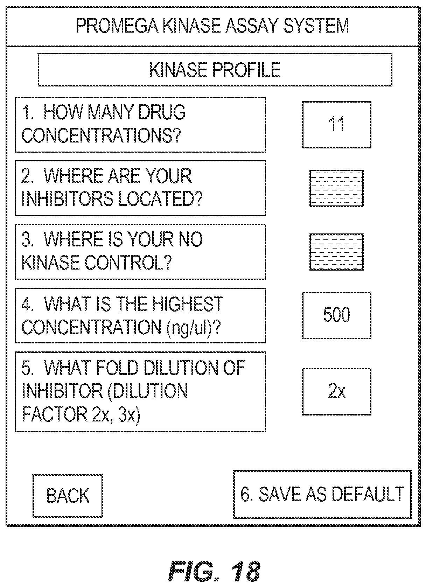

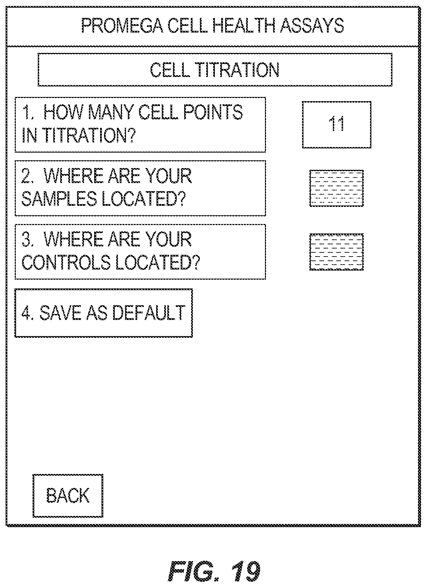

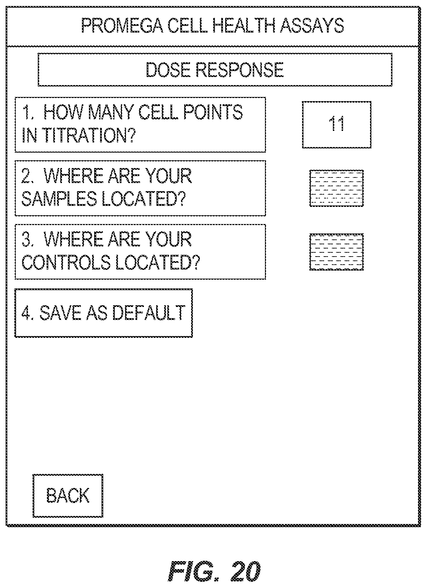

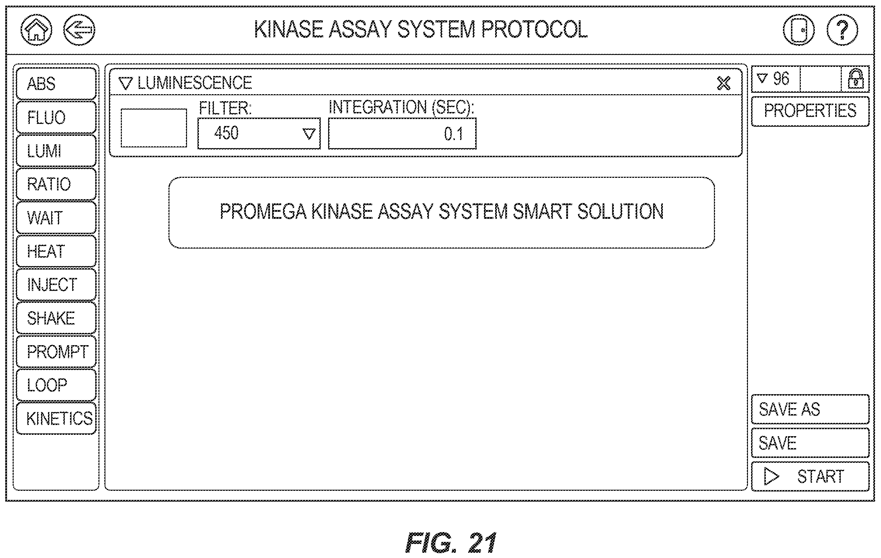

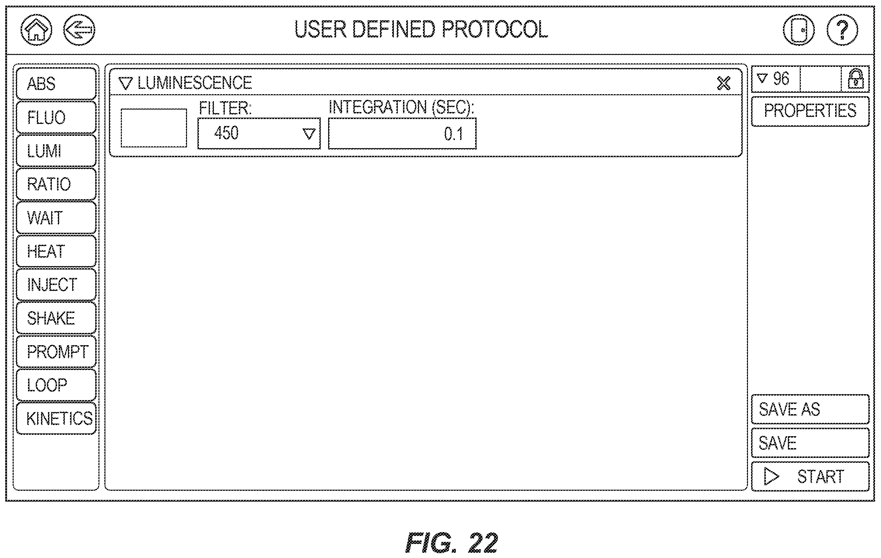

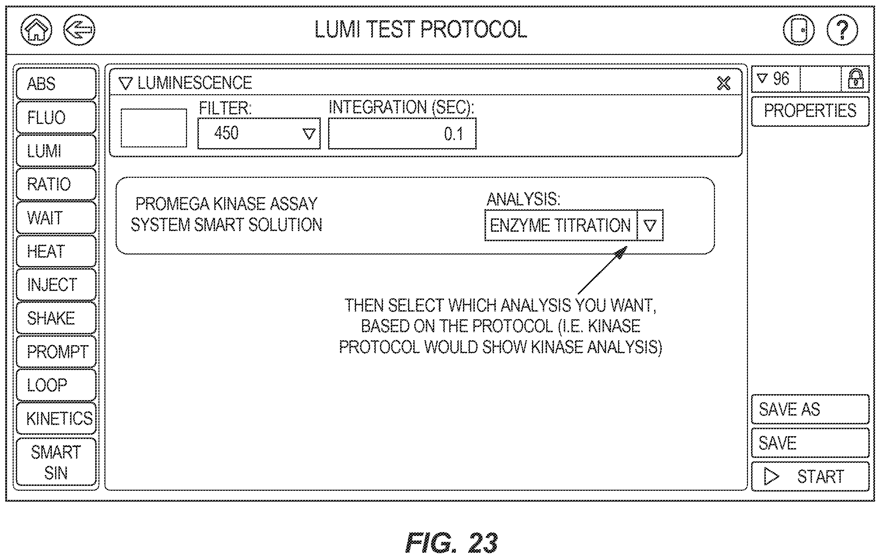

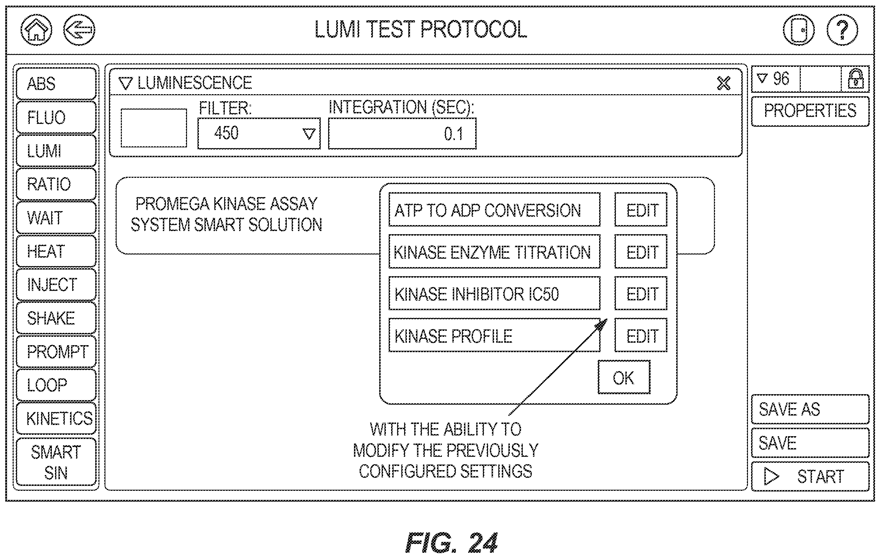

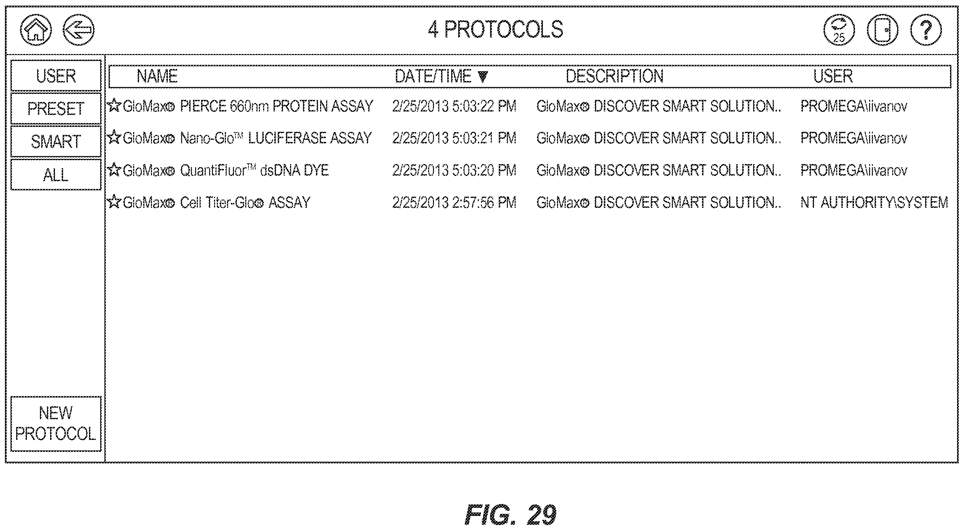

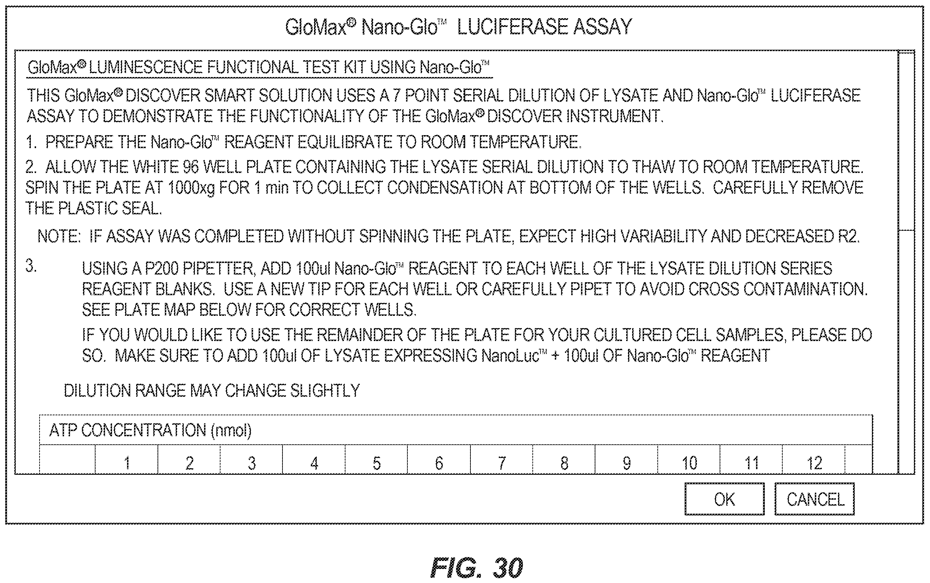

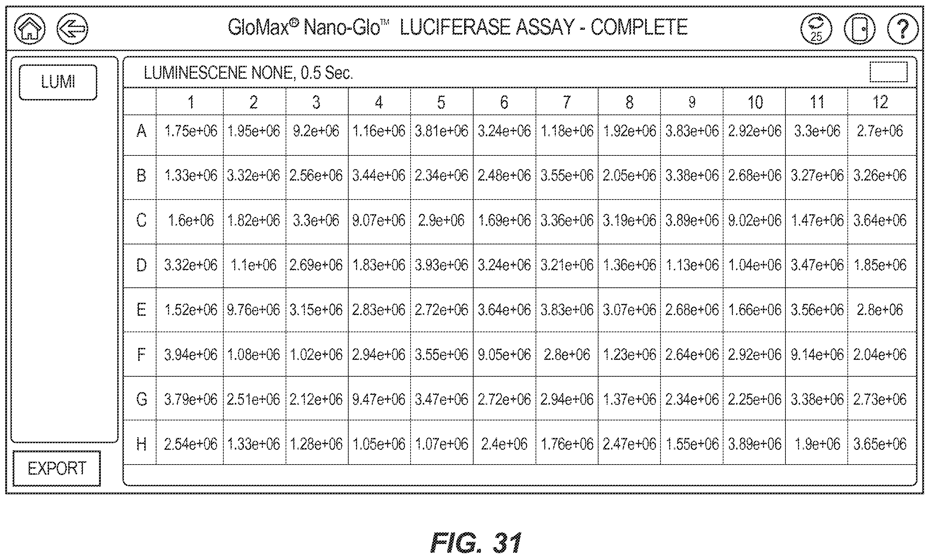

The user interface 70 is provided for viewing automatically selected assay, data analysis, and data output protocols. In some embodiments, the user interface 70 also provides for manual selection of protocols by the user. The user interface 70 includes a screen from which a user may view and select the protocols from the memory module 66. The screen may be, for example, an LCD or LED display and may include a touchscreen capability. The user interface 70 may be the touchscreen display of a tablet computer, or the combination of a keyboard and display of a laptop computer, or may be implemented using a series of buttons, e.g. adjacent to the screen. FIGS. 5-9, 13, 16-24, and 29-31 illustrate screen depictions of exemplary menus, protocol instructions, and user-selectable options that may be displayed on the user interface 70.

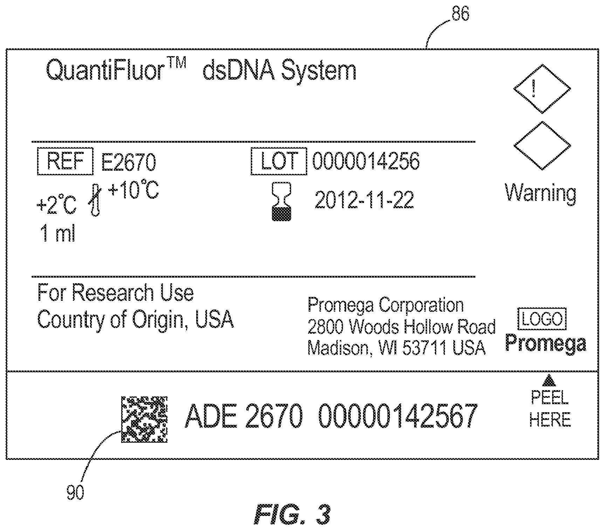

The scanner 74 is provided for automatic selection of reagent protocols. In some embodiments, the scanner 74 includes an optical bar code or matrix code reader. The scanner 74 is provided to read a machine readable media, such as a bar code, matrix code or RFID tag attached to a reagent box, bottle, or kit. FIG. 3 illustrates an example of a reagent box label 86 having a machine readable code such as a matrix code 90 (i.e., a two-dimensional code). The scanner 74 may also include an optical camera for reading bar codes or matrix codes, such as the camera of a tablet computer or other portable electronic device. In other embodiments, the scanner may be an RFID scanner or other type of reader device. In still other embodiments, the user may manually enter a code (e.g. a combination of letters and/or numbers) to indicate which protocol to use.

Upon reading a machine-readable label that is associated with a reagent, the scanner 74 generates a scanner signal corresponding to the particular reagent. The scanner signal is communicated to the controller 62. Upon receiving the scanner signal, the controller 62 selects one or more corresponding protocols from the memory 66. The available protocol(s) are then displayed on the user interface 70 and provided to the data processor 78.

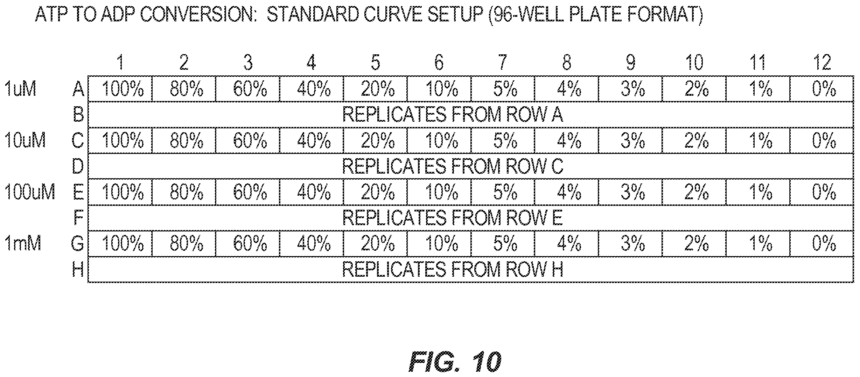

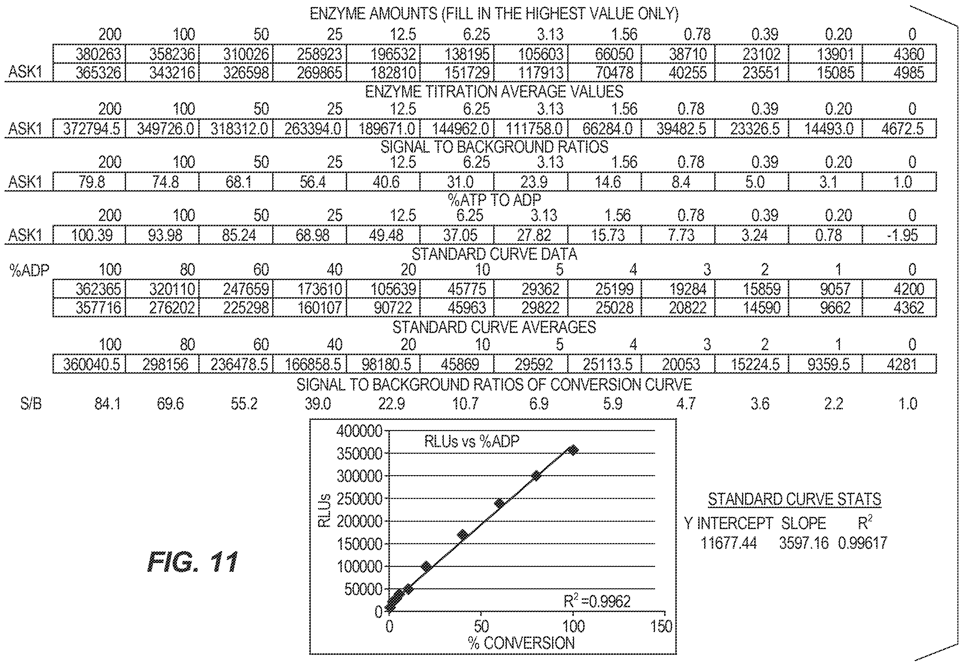

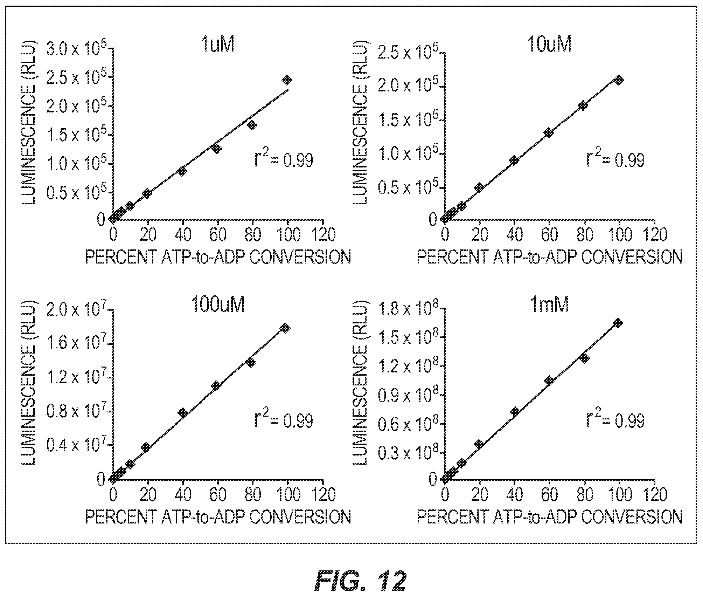

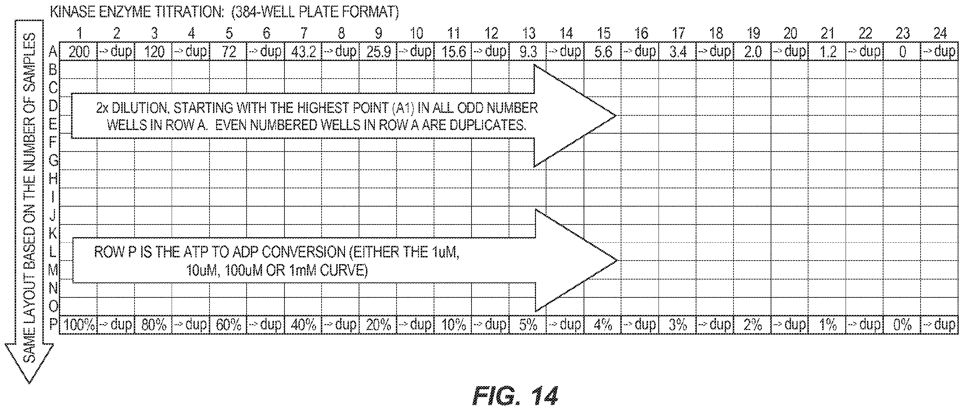

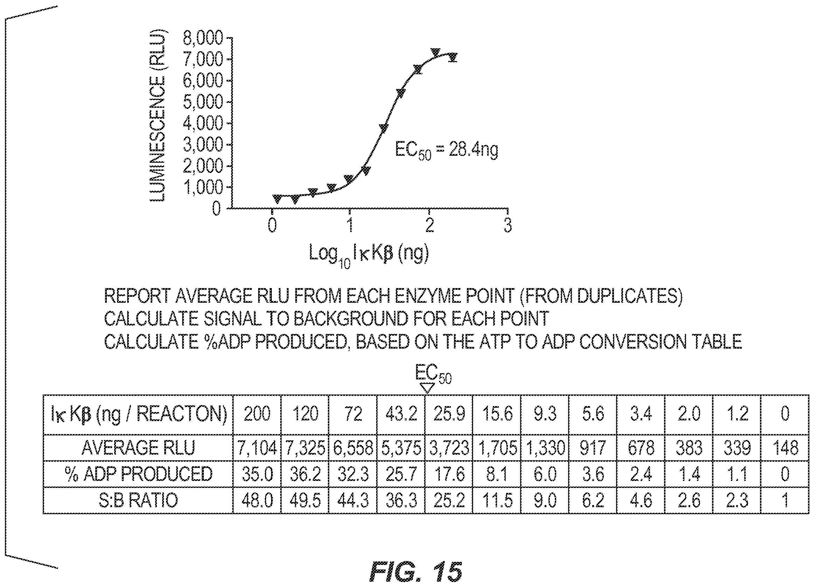

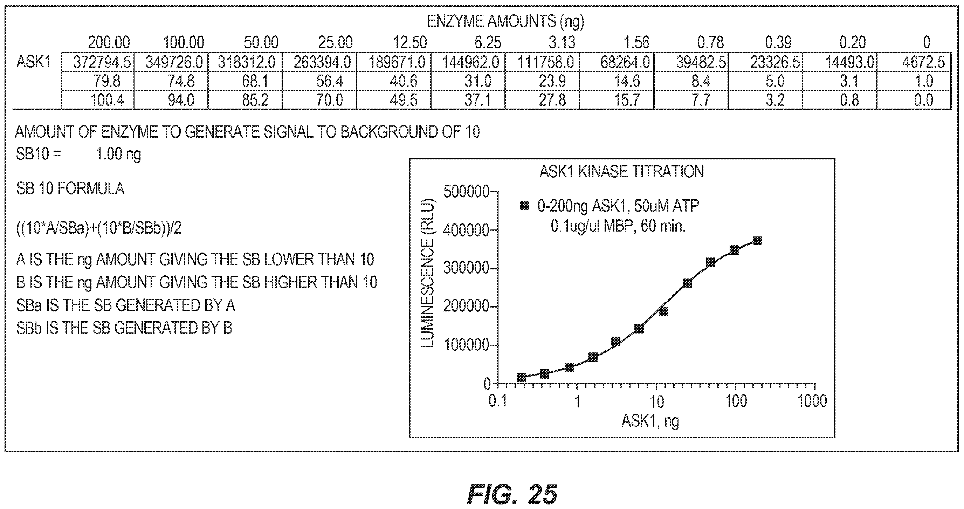

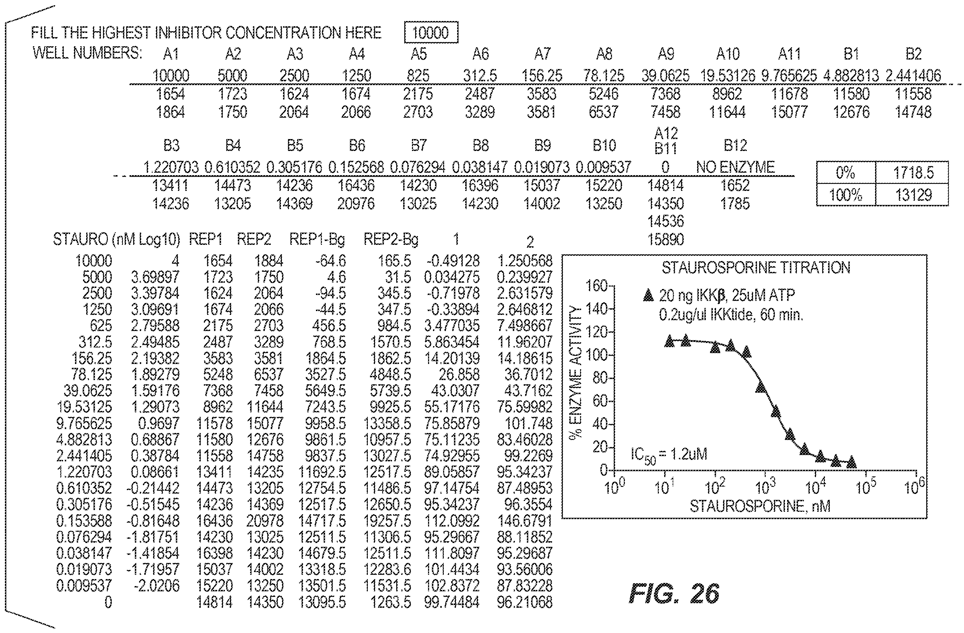

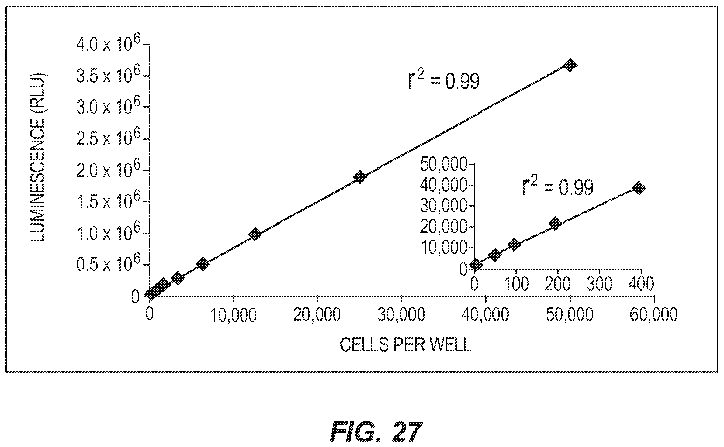

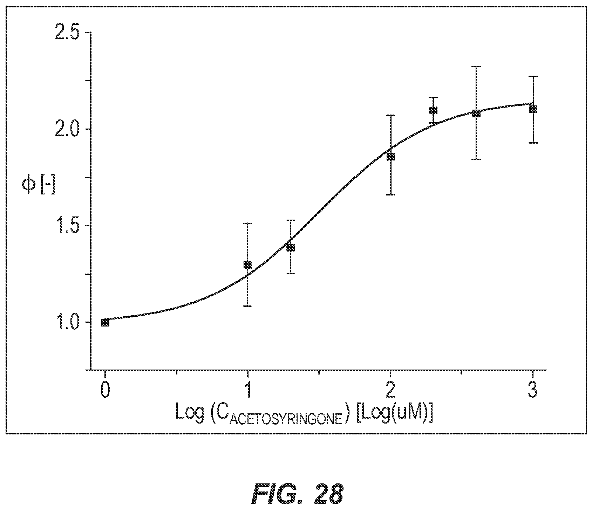

The data processor 78 communicates with the controller 62 to receive raw data from the controller 62 to process, analyze and plot the data according to the protocol. The processed data, including plots and statistical analysis, may be displayed on the user interface 70, and/or may be displayed on a separate display. In some embodiments, the data processor utilizes Microsoft® Excel®, or other spreadsheet software, for data analysis and processing. FIGS. 10-12, 14-15, 17, and 25-28 provide examples of processed data and plots from the data processor 78.

The combination of a user interface 70, scanner 74 and data processor 78 allows for the integration of the workflow steps of a) automatically selecting the correct instrument protocol based on reagent kit machine-readable label, b) data acquisition and then c) automatic data analysis for the user. The user may initiate the protocol by scanning the machine-readable label from the reagent kit box, utilizing the scanner 74 or by making a manual selection on the user interface 74. The protocol will then guide the user through the setup process to begin data acquisition. Once the user begins the method and collects their data, the raw data from the controller 62 is then automatically analyzed and plotted graphically for the user in a pre-defined manner by the data processor 78. Simplified setup may involve fewer user-input variables or more complex setup may involve additional user-input variables. The pre-analyzed data from the data processor 78 may then be exported with the raw data for the user in a final report, where the user can further manipulate the data as desired.

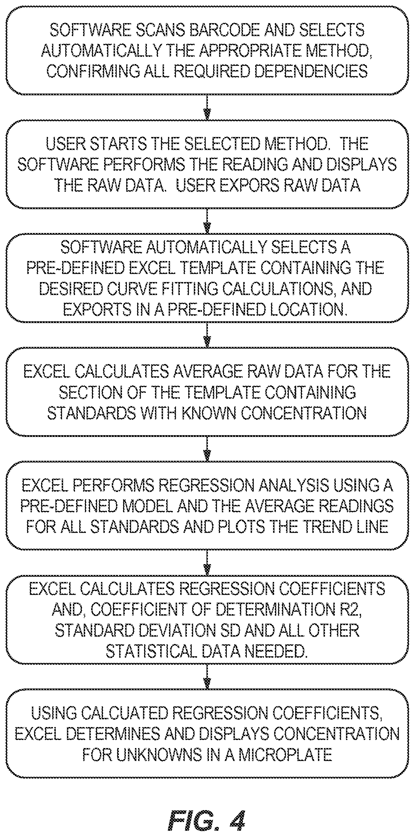

FIG. 4 provides an overview of one embodiment of the process of selecting a protocol, collecting data, and analyzing the data. A user first uses the scanner to scan a machine-readable label (e.g., the matrix code 90 of FIG. 3) that has been provided with the reagent. In response to scanning the barcode, the analysis system 10 automatically selects an appropriate method and confirms all required dependencies. This bypasses the need for the user to select a protocol manually or to build their own protocol.

After scanning the reagent kit, the protocol is initiated automatically. The protocol provides instructions for the user to load the samples and/or standards, and the ability for the user to select the type of standard curve they wish to perform, as well as the number of measurement points that are used to generate the standard curve. Next, the user starts the selected method, and the selected method is performed to generate a raw data collection. The raw data may be expressed, for example, in relative light units (RLUs), relative fluorescent units (RFUs), absorbance, or other characteristics of the sample.

Following raw data collection, the data is automatically plotted for the user so that the user does not have to do this following the data collection. Standards are measured at the same time as the experimental samples. The type of standard curve could be of a variety of types (e.g., linear fit, dose response, quadratic equation, etc.) as well as the number of standard points that are used to generate the standard curve (e.g., 2-12 points).

Then, the experimental samples are calculated based on the standard curve to inform the user if their assay worked and to help them interpret the results. The data processor 78 automatically selects a pre-defined template containing the desired curve fitting calculations and can export the data to a pre-defined location. The data processor 78 calculates average raw data for the section of the template containing standards with known concentration.

The data processor 78 also performs regression analysis using a pre-defined regression model, incorporating the average readings for all standards, and plots the trend line. The data processor 78 calculates regression coefficients, a coefficient of determination R2, a standard deviation SD, and other necessary statistical data. Using calculated regression coefficients, the data processor determines and displays concentration for unknowns in a microplate.

The following non-limiting examples illustrate work flow utilizing particular reagents.

### Example 1: CellTiter-Glo® ATP Titration

Workflow begins when a user scans the barcode of GloMax® CellTiter-Glo® luminescence test kit with the scanner 74.

The following instructions are displayed on the user input screen of the user interface 70:
- "The GloMax® CellTiter-Glo® Luminescence Functional Test Kit is used to test the function of the GloMax® Discover Instrument using a 7 point serial dilution of ATP and the CellTiter®-Glo Assay."
- "Prepare the CellTiter-Glo® Reagent and allow to equilibrate to room temperature."
- "Wells A1-A8, B1-B8, and C1-C8 contain a serial dilution ofATP and blanks. Add 100ul of CellTiter-Glo® Reagent to each well of the dilution series and blanks."
- "If you would like to use the remainder of the plate for your cells samples, please do so. Make sure to add 100ul of sample + 100ul of CellTiter-Glo® Reagent."
- "Click Continue and place the plate into the GloMax Discover when the door opens" Once these steps are completed, the door will open.

Next, the protocol populates instructions on the user interface 70 screen:
- "Shake the plate for 30 seconds."
- "Incubate for 10 minutes."
- "Read the luminescence."

The raw data is collected and a linear calculation is applied. An average of plate wells A8, B8, and C8 is taken. These are the background controls. The Average Background from each well (A1 to A7, B1 to B7 and C1 to C7) is subtracted. Next, the background-subtracted triplicate samples from A1,B1,C1; A2,B2,C2; etc. through column 7 are averaged. Next, a plot is made of the Average RLU minus Background values versus the ATP concentration, and graph labels are added. An R2 value is calculated from the linear fit.

### Example 2: QuantiFluor® dsDNA titration

Workflow beings when a user scans a barcode of GloMax® Fluorescence Test Kit with the scanner.

The following prompts appear on the user input display of the user interface 70:
- "The GloMax® Fluorescence Functional Test Kit is used to test the function of the GloMax® Discover Instrument using a 6 point serial dilution of Lambda DNA and the QuantiFluor™ dsDNA System."
- "Allow the BLACK 96 well plate containing the DNA serial dilution to thaw to room temperature. Spin the plate at 1000xg for 1min to collect condensation at the bottom of the wells. Carefully remove the plastic seal."
- "Wells A1-A6, B1-B6, and C1-C6 contain a serial dilution of DNA and blanks. Add 100ul of the diluted QuantiFluor™ dsDNA dye to each well of the dilution series and blanks."
- "If you would like to use the remainder of the plate for your cells samples, please do so. Make sure to add 100ul of sample + 100ul of diluted QuantiFluor™ dsDNA dye."
- "Click Continue, and place the plate into the GloMax® Discover when the door opens" Once these steps are completed, the door will open.

A protocol populates the screen:
- "Shake the plate for 30 seconds."
- "Incubate for 5 minutes."
- "Read the fluorescence using 490nm excitation and 510-570nm emission."

Next, the raw data is collected and a linear calculation is applied. First, an average of wells A6, B6, and C6 is taken as background controls. The Average Background is then subtracted from each well (A1 to A5, B1 to B5, and C1 to C5). The background-subtracted triplicate samples from A1,B1,C1; A2,B2,C2; etc. through column 5 are averaged.

Next, a plot is generated of the Average RFU minus Background values vs. the DNA concentration and graph labels are applied. An R2 value, calculated from the linear fit, is also applied.

### Example 3: Bovine Serum Albumin Assay.

Workflow begins when a user scans the barcode of GloMax® Absorbance Test Kit with the scanner.

A window is displayed on the screen of the user interface 70, with the following instructions for the user:
- "The GloMax® Absorbance Functional Test Kit is used to test the function of the GloMax® Discover Instrument using a 7 point dilution ofBSA protein and the Pierce 660nm Protein Assay."
- "Allow the CLEAR 96 well plate containing the BSA protein dilution to thaw to room temperature. Spin the plate at 1000xg for 1min to collect condensation at the bottom of the wells. Carefully remove the plastic seal."
- "Wells A1-A8, B1-B8, and C1-C8 contain a dilution of protein and blanks. Add 150ul of the Protein Assay Reagent to each well of the dilution series and blanks"
- "If you would like to use the remainder of the plate for your cells samples, please do so. Make sure to add 20ul of sample + 150ul of Pierc Assay Reagent"
- "Click Continue and place the plate into the GloMax® Discover when the door opens" Once these steps are completed, the door will open.

A protocol subsequently populates the screen:
- "Shake the plate for 30 seconds."
- "Incubate for 5 minutes."
- "Read the absorbance using 600nm."

The raw data is then collected and a linear calculation of the data is applied. First, an average of A8, B8, and C8 is calculated and used as the background controls. Next, the Average Background is subtracted from each well (A1 to A5, B1 to B7, and C1 to C7). The background-subtracted triplicate samples from A1,B1,C1; A2,B2,C2; etc. through column 7 are averaged.

A plot is made of the Average Absorbance minus Background values versus the protein concentration and an R2 value is calculated from the linear fit.

### Example 4: Nano-Glo® Reporter Titration.

Workflow begins when a user scans the barcode of a GloMax® Nano-Glo® Luminescence Kit.

A window is displayed on the user interface, with the following instructions for the user:
- "The GloMax® Nano-Glo® Luminescence Functional Test Kit is used to test the function of the GloMax® Discover Instrument using a 7 point serial dilution of reporter lysate and the Nano-Glo® Luciferase Assay."
- "Prepare the Nano-Glo® reagent and allow to equilibrate to room temperature"
- "Allow the WHITE 96 well plate containing the lysate serial dilution to thaw to room temperature. Spin the plate at 1000xg for 1min to collect condensation at the bottom of the wells. Carefully remove the plastic seal."
- "If you would like to use the remainder of the plate for your cells samples, please do so. Make sure to add 100ul of lysed cells expressing NanoLuc® luciferase + 100ul of Nano-Glo® Reagent."
- "Click Continue and place the plate into the GloMax® Discover when the door opens" Once these steps are completed, the door will open.

Next, a protocol populates the screen:
- "Shake the plate for 30 seconds."
- "Incubate for 10 minutes."
- "Read the luminescence."

The raw data is then collected and a linear calculation of the data is applied. First, wells A8, B8, and C8 are averaged and used as the background controls. Next, the Average Background is subtracted from each well (A1 to A5, B1 to B7, and C1 to C7). The background subtracted triplicate samples from A1,B1,C1; A2,B2,C2; etc. through column 7 are then averaged.

The average RLU-Background values versus the NanoLuc® luciferase concentration are plotted. Labels are applied to the plot and an R2 value, calculated from the linear fit, is displayed.

Thus, the invention provides, among other things, an analyzer with automated protocol prompting. Various features and advantages of the invention are set forth in the following claims.

## Claims

1. An analysis system (10) utilizing a reagent for performing a biological assay on a sample, where the reagent is associated with a machine-readable label (86), the system comprising:
a scanner (74) for reading the machine-readable label (86), the scanner generating a scanner signal in response to reading the machine-readable label and communicating the scanner signal to a controller (62);
a memory (66) storing a plurality of protocols for the automation of one or more assays performed on one or more samples;
a detector (58) generating a detector signal in response to the sample;
the controller (62) receiving the scanner signal and selecting a corresponding protocol from the plurality of protocols from the memory (66) in response to the scanner signal and the controller receiving the detector signal and processing the detector signal into a data set;
a user input module (70) for user selection of assay protocol parameters, the user input module in communication with the controller (62); and **characterised in that**:
the protocol also include instructions for processing the data set and **in that** it further comprises a data processing module (78) in communication with the controller (62), the data processing module receiving the data set and processing the data set according to the protocol, performing curve-fitting calculations in response to the scanner signal and generating a plot from the data set in response to the scanner signal.

2. The analysis system (10) of claim 1, wherein the scanner (74), the user input module (70), and the data processing module (78) are components of a portable electronic device (82).

3. The analysis system (10) of claim 2, wherein the portable electronic device (82) is a tablet computer or a laptop computer.

4. The analysis system (10) of claim 1, wherein the machine readable label (86) includes a bar code, and wherein the scanner (74) is configured to read a bar code.

5. The analysis system (10) of claim 1, wherein the machine readable label (86) includes a matrix code and wherein the scanner (74) is configured to read the matrix code.

6. The analysis system (10) of claim 1, wherein the machine readable label (86) includes an RFID tag and wherein the scanner (74) is an RFID reader.

7. The analysis system (10) of claim 1, wherein the data processing module (78) determines a coefficient of determination value from the data set in response to the scanner signal.

8. The analysis system (10) of claim 1, wherein the detector (58) includes a luminescence, fluorescence, absorbance, UV-visible light or multi-mode detector.

9. The analysis system (10) of claim 1, wherein the user input module (70) includes a display portion, the display portion displaying user-selectable protocol parameters in response to the scanner signal.

10. A method of performing a biological assay on a sample, comprising:
providing an analysis system including a detector, a scanner, a memory module, and a data processor;
providing a reagent including a machine-readable label which contains information for selection of a protocol;
scanning the machine readable label with the scanner and generating a scanner signal in response to reading the machine-readable label;
providing a plurality of protocols for biological assays on the memory module;
automatically selecting a protocol of the plurality of protocols in response to the scanner signal, the protocol requiring the reagent;
detecting a characteristic of the sample with the detector, the detector generating a detector signal;
collecting a data set from the detector signal; and **characterized in that** the protocol also include instructions for processing the data set and further by processing the data set according to the protocol with the data processor, the processing includes performing curve-fitting calculations in response to the scanner signal; and plotting the data set according to the protocol.

11. The method of claim 10, further comprising calculating a coefficient of determination from the data set.

12. The method of claim 10, wherein the act of scanning the machine readable label includes scanning a bar code, scanning a matrix code, or scanning an RFID tag.

13. The method of claim 10, wherein the act of detecting a characteristic of the sample with the detector includes detecting at least one of a luminescence, fluorescence, absorbance or UV-visible light of the sample.

14. The method of claim 10, further comprising providing a user input module for user selection of protocol parameters.

15. The method of claim 10, further comprising displaying protocol parameters on the user input member.

## Patentansprüche

1. Analysesystem (10), das ein Reagens zum Durchführen eines biologischen Assays an einer Probe nutzt, wobei das Reagens mit einem maschinenlesbaren Marker (86) verknüpft ist, wobei das System Folgendes umfasst:
einen Scanner (74) zum Auslesen des maschinenlesbaren Markers (86), wobei der Scanner als Reaktion auf das Auslesen des maschinenlesbaren Markers ein Scannersignal erzeugt und das Scannersignal an ein Steuergerät (62) kommuniziert;
einen Speicher (66), der mehrere Protokolle für die Automatisierung eines oder mehrerer an einer oder mehreren Proben durchgeführten Assays speichert;
einen Detektor (58), der als Reaktion auf die Probe ein Detektorsignal erzeugt;
wobei das Steuergerät (62) das Scannersignal empfängt und als Reaktion auf das Scannersignal ein entsprechendes Protokoll von den mehreren Protokollen von dem Speicher (66) auswählt und das Steuergerät das Detektorsignal empfängt und das Detektorsignal in einen Datensatz verarbeitet;
ein Benutzereingabemodul (70) zur Benutzerauswahl von Assayprotokollparametern, wobei das Benutzereingabemodul in Kommunikation mit dem Steuergerät (62) steht; und
**dadurch gekennzeichnet, dass**:
das Protokoll auch Anweisungen zum Verarbeiten des Datensatzes enthält, und dadurch, dass es ferner ein Datenverarbeitungsmodul (78) in Kommunikation mit dem Steuergerät (62) umfasst, wobei das Datenverarbeitungsmodul den Datensatz empfängt und den Datensatz gemäß dem Protokoll verarbeitet, als Reaktion auf das Scannersignal Ausgleichsrechnungen durchführt und als Reaktion auf das Scannersignal ein Plot aus dem Datensatz erzeugt.

2. Analysesystem (10) nach Anspruch 1, wobei der Scanner (74), das Benutzereingabemodul (70) und das Datenverarbeitungsmodul (78) Komponenten eines tragbaren elektronischen Geräts (82) sind.

3. Analysesystem (10) nach Anspruch 2, wobei das tragbare elektronische Gerät (82) ein Tablet-Computer oder ein Laptop-Computer ist.

4. Analysesystem (10) nach Anspruch 1, wobei der maschinenlesbare Marker (86) einen Barcode enthält und wobei der Scanner (74) konfiguriert ist, einen Barcode auszulesen.

5. Analysesystem (10) nach Anspruch 1, wobei der maschinenlesbare Marker (86) einen Matrixcode enthält und wobei der Scanner (74) konfiguriert ist, den Matrixcode auszulesen.

6. Analysesystem (10) nach Anspruch 1, wobei der maschinenlesbare Marker (86) ein RFID-Etikett enthält und wobei der Scanner (74) ein RFID-Lesegerät ist.

7. Analysesystem (10) nach Anspruch 1, wobei das Datenverarbeitungsmodul (78) als Reaktion auf das Scannersignal einen Bestimmtheitsmaßwert aus dem Datensatz bestimmt.

8. Analysesystem (10) nach Anspruch 1, wobei der Detektor (58) einen Lumineszenz-, Fluoreszenz-, Absorbanz-, UV-sichtbares-Licht- oder Multimodusdetektor enthält.

9. Analysesystem (10) nach Anspruch 1, wobei das Benutzereingabemodul (70) einen Anzeigeteil enthält, wobei der Anzeigeteil als Reaktion auf das Scannersignal vom Benutzer auswählbare Protokollparameter anzeigt.

10. Verfahren zum Durchführen eines biologischen Assays an einer Probe, Folgendes umfassend:
Bereitstellen eines Analysesystems, das einen Detektor, einen Scanner, ein Speichermodul und einen Datenprozessor enthält;
Bereitstellen eines Reagens, das einen maschinenlesbaren Marker, der Informationen zum Auswählen eines Protokolls beinhaltet, enthält;
Scannen des maschinenlesbaren Markers mit dem Scanner und Erzeugen eines Scannersignals als Reaktion auf das Auslesen des maschinenlesbaren Markers;
Bereitstellen mehrerer Protokolle für biologische Assays auf dem Speichermodul;
automatisches Auswählen eines Protokolls der mehreren Protokolle als Reaktion auf das Scannersignal, wobei das Protokoll das Reagens benötigt;
Erkennen eines Merkmals der Probe mit dem Detektor, wobei der Detektor ein Detektorsignal erzeugt;
Sammeln eines Datensatzes von dem Detektorsignal; und
**dadurch gekennzeichnet, dass** das Protokoll auch Anweisungen zum Verarbeiten des Datensatzes enthält, und ferner durch
Verarbeiten des Datensatzes gemäß dem Protokoll mit dem Datenprozessor, wobei das Verarbeiten das Durchführen von Ausgleichsrechnungen als Reaktion auf das Scannersignal enthält; und Plotten des Datensatzes gemäß dem Protokoll.

11. Verfahren nach Anspruch 10, ferner umfassend das Berechnen eines Bestimmtheitsmaßes aus dem Datensatz.

12. Verfahren nach Anspruch 10, wobei der Vorgang des Scannens des maschinenlesbaren Markers das Scannen eines Barcodes, das Scannen eines Matrixcodes oder das Scannen eines RFID-Etiketts enthält.

13. Verfahren nach Anspruch 10, wobei der Vorgang des Bestimmens eines Merkmals der Probe mit dem Detektor das Bestimmen einer Lumineszenz, einer Fluoreszenz, einer Absorbanz oder eines UV-sichtbaren Lichts der Probe enthält.

14. Verfahren nach Anspruch 10, ferner umfassend das Bereitstellen eines Benutzereingabemoduls für Benutzerauswahl von Protokollparametern.

15. Verfahren nach Anspruch 10, ferner umfassend das Anzeigen von Protokollparametern auf dem Benutzereingabeelement.

## Revendications

1. Système d'analyse (10) utilisant un réactif pour réaliser un dosage biologique sur un échantillon, où le réactif est associé à un label lisible par machine (86), le système comprenant:
un scanneur (74) pour lire le label lisible par machine (86), le scanneur générant un signal de scanneur en réponse à la lecture du label lisible par machine et communiquant le signal de scanneur à un dispositif de commande (62) ;
une mémoire (66) stockant une pluralité de protocoles pour l'automatisation d'un ou de plusieurs dosages réalisés sur un ou plusieurs échantillons ;
un détecteur (58) générant un signal de détecteur en réponse à l'échantillon ;
le dispositif de commande (62) recevant le signal de scanneur et sélectionnant un protocole correspondant parmi la pluralité de protocoles issus de la mémoire (66) en réponse au signal de scanneur et le dispositif de commande recevant le signal de détecteur et traitant le signal de détecteur dans un ensemble de données ;
un module d'entrée utilisateur (70) pour une sélection par l'utilisateur de paramètres de protocole de dosage, le module d'entrée utilisateur étant en communication avec le dispositif de commande (62) ; et
**caractérisé en ce que** :
le protocole comporte également des instructions pour traiter l'ensemble de données et **en ce qu'**il comprend en outre un module de traitement de données (78) en communication avec le dispositif de commande (62), le module de traitement de données recevant l'ensemble de données et traitant l'ensemble de données selon le protocole, réalisant des calculs d'ajustement de courbe en réponse au signal de scanneur et générant un tracé à partir de l'ensemble de données en réponse au signal de scanneur.

2. Système d'analyse (10) selon la revendication 1, dans lequel le scanneur (74), le module d'entrée utilisateur (70) et le module de traitement de données (78) sont des composants d'un dispositif électronique portable (82).

3. Système d'analyse (10) selon la revendication 2, dans lequel le dispositif électronique portable (82) est une tablette informatique ou un ordinateur portable.

4. Système d'analyse (10) selon la revendication 1, dans lequel le label lisible par machine (86) comporte un code-barres, et dans lequel le scanneur (74) est configuré pour lire un code-barres.

5. Système d'analyse (10) selon la revendication 1, dans lequel le label lisible par machine (86) comprend un code matriciel et dans lequel le scanneur (74) est configuré pour lire le code matriciel.

6. Système d'analyse (10) selon la revendication 1, dans lequel le label lisible par machine (86) comporte une étiquette RFID et dans lequel le scanneur (74) est un lecteur RFID.

7. Système d'analyse (10) selon la revendication 1, dans lequel le module de traitement de données (78) détermine un coefficient de valeur de détermination à partir de l'ensemble de données en réponse au signal de scanneur.

8. Système d'analyse (10) selon la revendication 1, dans lequel le détecteur (58) comporte un détecteur de luminescence, de fluorescence, d'absorbance, de lumière UV-visible ou multimode.

9. Système d'analyse (10) selon la revendication 1, dans lequel le module d'entrée utilisateur (70) comporte une portion d'affichage, la portion d'affichage affichant des paramètres de protocole sélectionnables par utilisateur en réponse au signal de scanneur.

10. Procédé de réalisation d'un dosage biologique sur un échantillon, comprenant :
la fourniture d'un système d'analyse comportant un détecteur, un scanneur, un module de mémoire et un processeur de données ;
la fourniture d'un réactif comportant un label lisible par machine qui contient des informations pour la sélection d'un protocole ;
le balayage du label lisible par machine avec le scanneur et la génération d'un signal de scanneur en réponse à la lecture du label lisible par machine ;
la fourniture d'une pluralité de protocoles pour des dosages biologiques sur le module de mémoire ;
la sélection automatique d'un protocole de la pluralité de protocoles en réponse au signal de scanneur, le protocole requérant le réactif ;
la détection d'une caractéristique de l'échantillon avec le détecteur, le détecteur générant un signal de détecteur ;
la collecte d'un ensemble de données à partir du signal de détecteur ; et
**caractérisé en ce que** le protocole comporte également des instructions pour traiter l'ensemble de données et en outre par
le traitement de l'ensemble de données selon le protocole avec le processeur de données, le traitement comportant la réalisation de calculs d'ajustement de courbe en réponse au signal de scanneur ; et le tracé de l'ensemble de données selon le protocole.

11. Procédé selon la revendication 10, comprenant en outre le calcul d'un coefficient de détermination à partir de l'ensemble de données.

12. Procédé selon la revendication 10, dans lequel l'acte de balayer le label lisible par machine comporte le balayage d'un code-barres, le balayage d'un code matriciel ou le balayage d'une étiquette RFID.

13. Procédé selon la revendication 10, dans lequel l'acte de détecter une caractéristique de l'échantillon avec le détecteur comporte la détection d'au moins l'une parmi une luminescence, une fluorescence, une absorbance ou une lumière UV-visible de l'échantillon.

14. Procédé selon la revendication 10, comprenant en outre la fourniture d'un module d'entrée utilisateur pour la sélection par l'utilisateur de paramètres de protocole.

15. Procédé selon la revendication 10, comprenant en outre l'affichage de paramètres de protocole sur l'organe d'entrée utilisateur.
